# EUROPÄISCHE PATENTSCHRIFT

(11) **EP 1 907 163 B1**
(45) Veröffentlichungstag und Bekanntmachung des Hinweises auf die Patenterteilung: **08.06.2011**
(21) Anmeldenummer: 06723207.4
(22) Anmeldetag: 03.03.2006
(51) Int. Cl.: B23K 26/38, G02B 27/64

(54) **VORRICHTUNG ZUM BOHREN UND FÜR DEN MATERIALABTRAG MITTELS LASERSTRAHL**
DEVICE FOR DRILLING AND FOR REMOVING MATERIAL USING A LASER BEAM
DISPOSITIF DE PERÇAGE ET D'ENLEVEMENT DE MATIERE A L'AIDE D'UN FAISCEAU LASER

(30) Priorität: 28.06.2005 DE 102005030149; 30.09.2005 DE 102005047328
(43) Veröffentlichungstag der Anmeldung: 09.04.2008
(73) Patentinhaber: Fraunhofer-Gesellschaft zur Förderung der angewandten Forschung e.V., 80686 München (DE)
(72) Erfinder: WAWERS, Wolf, 52066 Aachen (DE); GILLNER, Arnold, 52159 Roetgen (DE)
(74) Vertreter: Grimm, Ekkehard
(86) Internationale Anmeldenummer: PCT/EP2006/001964
(87) Internationale Veröffentlichungsnummer: WO 2007/000194

(56) Entgegenhaltungen:
- CA-A1- 2 260 462
- US-B1- 6 362 454

## Beschreibung

Die verlegende Erfindung betrifft eine Vorrichtung zum Bohren und für den Materialabtrag mittels Laserstrahl, die einen drehenden Bildrotator, einen in Strahlrichtung gesehen vor dem Bildrotator angeordneten Strahlmanipulator für die Winkel- und Lageeinstellung des Strahls relativ zur Rotationsachse des Bildrotators und eine Fokussiereinrichtung ausgangsseitig des Bildrotators aufweist.

In der Automobiltechnik, der Filtertechnik, der Elektronik und in vielen anderen Bereichen werden für die unterschiedlichsten Anwendungen kleine Bohrungen benötigt. Ein Beispiel hierfür sind Einspritzdüsen für Kraftstoffe, bei denen durch eine große Anzahl definiert angeordneter Bohrungen eine gleichmäßige Verteilung des Kraftstoffes während des Einspritzvorgangs mit der Folge eines verringerten Kraftstoffverbrauchs gewährleistet wird. Um hier, wie in anderen Applikationen auch, eine möglichst homogene und reproduzierbare Verteilung zu erreichen, müssen die Bohrungen sehr klein sein und sehr genau gefertigt werden. Die typischen Bohrungsdurchmesser liegen z.B. im Fall von Dieseleinspritzdüsen bei 100 µm bei einer Materialdicke von 1 mm und geforderten Genauigkeiten von 1 µm. Andere Beispiele mit ähnlichen Anforderungen und zum Teil noch kleineren Bohrungsdurchmessern von 20 - 50 µm sind Spinndüsen für Textilfasern, Auslassdüsen für Luftlager oder Startlochbohrungen für Drahterodierverfahren. In allen diesen Fällen können aufgrund der Werkstoffanforderungen, der Aspektverhältnisse und der geforderten Bohrungsgeometrie und Bearbeitungsgeschwindigkeit klassische Bohrverfahren nur noch bedingt eingesetzt werden.

Hier bietet die Lasertechnik mit ihren spezifischen Strahlungseigenschaften eine Alternative, die in den vergangenen Jahren zu einer Vielzahl von Anwendungen in den o.g. Bereichen geführt hat. Dabei kommen unterschiedliche Bohrprinzipien zum Einsatz.

Beim Einzelschussbohren wird mit einem einzigen Laserpuls mit typischerweise Pulsdauern von einigen 100 µs der Werkstoff aufgeheizt, aufgeschmolzen und über teilweise Verdampfung aus dem Bohrloch ausgetrieben.

Beim Perkussionsbohren erfolgt die Bohrung durch eine Reihe aufeinander folgender Pulse. Beim Trepannieren erzeugt man zunächst eine kleine Bohrung und schneidet anschließend die größere Bohrung aus.

In allen diesen Fällen ist der Bohrprozess selbst durch eine starke Schmelzebildung charakterisiert, die zu einer eingeschränkten Bohrungsqualität führt. Die höchsten Qualitäten erzielt man beim sogenannten Wendelbohren, einem flächigen Abtragsprozess, bei dem mit kurzen Laserpulsen das Material überwiegend verdampft wird. Die einzelnen Laserpulse eines hochrepetierenden Lasers werden überlappend nebeneinander gesetzt und entlang des Bohrungsumfangs auf einer Kreisbahn geführt. Bei jedem Umlauf wird, je nach Laserenergie und Material, eine dünne Schicht von 0,1-10 µm abgetragen. Durch eine Vielzahl solcher kreisförmiger Bewegungen wird dann die eigentliche Bohrung erzeugt. Der Bohrungsdurchmesser ergibt sich aus dem Kreisdurchmesser der Strahlrotation und dem Strahldurchmesser. Der Überlappungsgrad der aufeinander folgenden Pulse wird dabei so gewählt, dass einerseits möglichst wenig unbestrahlte Randbereiche verbleiben, andererseits die Laserstrahlung zwischen zwei Pulsen ausreichend weit weiter wandert, um nicht vollständig in das Schmelzbad des vorherigen Pulses zu treffen. Typischerweise wird der Überlappungsgrad in einem Bereich zwischen 50% - 95% gewählt.

Da die Schmelze nach einem Überlauf der Laserstrahlung wieder erstarrt ist, wird das Material nahezu ausschließlich dampfförmig abgetragen, wodurch sich hohe Oberflächengüten der Bohrungswandung und eine hohe Reproduzierbarkeit der Bohrung erreichen lassen. Verstärkt wird dieser Effekt durch die Verwendung von Kurz- und Ultrakurzpulslasem. Insbesondere die Verwendung von Lasern im Femto- und Pikosekundenbereich erlauben hier besonders hohe Bohrlochqualitäten, da hierbei die Pulsleistungen im Bereich 100 MW liegen und die resultierende Schmelzfilmdicke unter 1 µm beträgt.

Wesentliche Voraussetzung zum Einsatz dieses Bohrprozesses ist die Drehung des Laserstrahls auf einer Kontur. Im einfachsten Fall ist dies eine Kreisbahn. Da die Kreisgeschwindigkeit des Laserstrahls extrem hoch ist, werden an die Optik zur Drehung des Strahls besonders hohe Anforderungen gestellt. So beträgt zum Beispiel bei einem Laserstrahldurchmesser von 20 µm, einem Überlappungsgrad von 50% und einer Pulsfrequenz von 20 kHz die Kreisgeschwindigkeit 200 mm/s. Bei einem geforderten Bohrungdurchmesser von 60 µm bedeutet dies Rotationsfrequenzen des Laserstrahls von ca. 1000 Hz.

Diese hohen Frequenzen können mit klassischen Strahlablenksystemen, wie z.B. Galvanometerscannem, nicht mehr realisiert werden. Für diesen Zweck wurden in der Vergangenheit eine Reihe unterschiedlicher schnell rotierender Systeme entwickelt und in der Literatur bereits beschrieben.

Eine Möglichkeit zur Drehung eines Laserstrahls auf einer Kreisbahn besteht aus einer Anordnung von rotierenden Keilplatten, welche die Laserstrahlung auf eine Kreisbahn lenken. Die Laserstrahlung rotiert bei diesem System mit der gleichen Geschwindigkeit wie die Keilplatten. Die Einstellung von Bohrungsdurchmesser und Aufweitungswinkel der Bohrung erfolgt dabei durch verschieben und Verdrehen der rotierenden Keilplatten gegeneinander.

Eine weitere Möglichkeit ist die Verwendung eines rotierenden Bildrotators, durch welchen die Laserstrahlung hindurch geleitet wird. Nach dem Durchgang durch den Bildrotator rotiert die Laserstrahlung sowohl um die Drehachse des Bildrotators als auch sich selbst. Wird eine stillstehende Fokussierlinse dem Bildrotator nachgelagert, können durch die beiden Rotationsbewegungen der dann fokussierten Laserstrahlung kreisrunde Bohrungen erzeugt werden. Durch die Rotation der Laserstrahlung in sich selbst können auch kleinste Bohrungsdurchmesser realisiert werden, indem der Wendeldurchmesser, d.h. der Durchmesser der um die Drehachse des Bildrotators rotierenden Laserstrahlung, gegen Null geht. Dies ist allerdings bei Systemen, in denen die Laserstrahlung nicht in sich selbst rotiert, nicht möglich; hier wird immer ein minimaler Wendeldurchmesser benötigt.

Die US 6,362,454 B1 beschreibt eine Vorrichtung, die einen Laser umfasst, dessen Strahl auf einen Strahlrotator gerichtet wird. Der Strahlrotator ist über einen Antrieb drehbar. Der Strahlrotator setzt in einer Ausführungsform drei reflektive Flächen ein, die den Strahl um die Strahlachse drehen. Durch diese Strahldrehung soll erreicht werden, dass Unregelmäßigkeiten über den Strahlquerschnitt gesehen ausgeglichen werden. Es wird auch eine Ausführungsform gezeigt, die auf einen Strahlrotator mit Prismen gerichtet ist, um eine Strahldrehung zu erreichen. In einer konkreteren Ausführungsform wird auch eine Art Strahlmanipulator beschrieben, mit dem bei einer außeraxialen Positionierung des Strahls und einer nachfolgenden Rotation des Rotators der Strahl um die optische Achse rotiert und dabei in sich gedreht wird.

Die CA 2 260 462 A1 beschreibt ein Verfahren zum Kompensieren von opto-mechanischen Ausrichtungsfehlern zwischen der optischen Achse der Bilddrehvorrichtung und der mechanischen Drehachse der Bilddrehvorrichtung. Diese Anordnung umfasst ein Dove-Prisma. Bezüglich eines solchen Dove-Prismas wird ausgeführt, dass irgendeine winkelmäßige Fehlausrichtung der Achse des Dove-Prismas in Bezug auf die Spindelachse ein winkelmäßiges Wobbeln in dem das Prisma verlassenden Laserstrahl hervorruft. Wenn dann eine Linse nach dem sich rotierenden Prisma angeordnet wird, um den Strahl auf einen kleinen Fleck zu fokussieren, führt das winkelmäßige Strahlwobbeln dazu, dass sich die Position des fokussierten Flecks um die Drehachse (Spinner-Achse) dreht. Diese Vorrichtung sieht daher eine Kompensation vor, um dieses Wobbeln zu vermeiden.

Der vorliegenden Erfindung liegt die Aufgabe zugrunde, die Auswirkungen der fertigungsbedingten Geometriefehler von Bildrotatoren als Teil der erfindungsgemäßen Vorrichtung zum Bohren und für den Materialabtrag mittels Laserstrahl auszugleichen. Bildrotatoren können Strahlung transmitierende Prismen, wie das Dove-Prisma oder das Abbe-König-Prisma, aber auch reflektierende Systeme, wie eine K-Spiegelanordnung, sein.

Diese Aufgabe wird bei einer Vorrichtung der eingangs genannten Art dadurch gelöst, dass zwischen Bildrotator und Fokussiereinrichtung eine Ausgleichsvorrichtung angeordnet ist, die in gleicher Drehrichtung und mit gleicher Drehfrequenz mit dem Bildrotator dreht, wobei die Ausgleichsvorrichtung eine Parallelversatzeinheit und Winkeländerungseinheit aufweist, und dass die Ausgleichsvorrichtung in ihrer relativen Drehposition zu dem Bildrotator in einer dann als Grundeinstellung dienenden Korrekturjustage einstellbar ist, wobei diese Grundeinstellung dann für alle Einstrahlpositionen und -winkel des Bildrotators beibehalten wird.

Mit der erfindungsgemäßen Anordnung kann in der Bearbeitungsebene eine gleichförmige Rotationsbewegung (Strahlform) und damit ein gleichmäßiger Abtrag erreicht werden, wodurch eine runde Bohrung gebildet werden kann.

Ein wesentlicher Bestandteil der erfindungsgemäßen Anordnung ist die Ausgleichseinrichtung, die in ihrer relativen Drehposition zu dem Bildrotator in einer Grundstellung einstellbar ist. Mit einer solchen Ausgleichsvorrichtung, die vorzugsweise eine Planversatzeinheit mit einer kippbar gelagerten Planplatte und zwei kippbar gelagerte Keilplatten umfasst, kann der aus dem Bildrotator austretende Laserstrahl von der beschreibenden Kreisbahn zum Mittelpunkt zurückjustiert werden. Die Ausgleichsvorrichtung ist hier drehbar um die Achse des Bildrotators, der vorzugsweise in einer Hohlwelle gelagert ist, angeordnet und rotiert mit der gleichen Winkelgeschwindigkeit wie das Dove-Prisma. Mit dieser Anordnung können somit alle Fertigungs- und auch Justagefehler rotierender Optiken auf Basis von Bildrotatoren vollständig ausgeglichen werden. Ein besonderer Vorteil dieser Anordnung liegt auch darin, dass die Korrekturjustage nur einmalig ausgeführt werden muss und dann für alle Einstrahlpositionen und -winkel des Bildrotators gilt. Die Ausgleichsvorrichtung wird nach dem Einstellvorgang fest mit der Hohlwelle verbunden.

Mittels einer Winkelverstellung des einfallenden Laserstrahls über den Strahlmanipulator und somit in Bezug auf den Bildrotator kann der Durchmesser der Strahlrotation eingestellt werden. Eine seitliche Verschiebung des Strahls bewirkt im Fokus der in der Bohroptik eingesetzten Fokussiereinrichtung, vorzugsweise einer Fokussierlinse, eine Änderung des Einfallswinkels der Laserstrahlung auf das Werkstück. Je nach Einstellung von Verschiebung und Strahlverkippung durch den Strahlmanipulator lassen sich damit positive und negative Konizitäten von Bohrungen mit unterschiedlichen Durchmessern erzeugen.

Weiterhin können durch die spezielle Anordnung von Bildrotator und mitrotierender Ausgleichsvorrichtung, d.h. den Korrektur- und Justagekeilplatten in der bevorzugten Ausführungsform, bei still stehenden Einstellelementen des Strahlmanipulators für Einfallswinkel und Rotationsdurchmesser für letztgenannte Komponenten komplexere und damit flexiblere Einheiten verwendet werden.

Es sollte hervorgehoben werden, dass sowohl Dove-Prismen als auch K-Spiegel, die ohne weitere Maßnahmen als Bildrotatoren eingesetzt werden würden, den entscheidenden Nachteil haben, dass bei kleinsten Fehlern in der Winkelgenauigkeit der brechenden und spiegelnden Flächen Ablenkfehler auftreten, die bei Drehungen des Prismas zu unrunden Strahlbewegungen führen. So rotiert bei einem Dove-Prisma prinzipbedingt der Laserstrahl bei einer einmaligen Umdrehung des Prismas mit der doppelten Winkelgeschwindigkeit des Prismas. Fällt der Laserstrahl unter einem bestimmten Winkel auf das Dove-Prisma, so beschreibt der Laserstrahl bei einer Umdrehung des Prismas außerdem zwei konzentrische Kreise gleichen Durchmessers. Bei Abweichungen der Prismageometrie von nur wenigen mrad bzw. µ(N)m sind die Durchmesser beider Kreise deutlich unterschiedlich, die Mittelpunkte der Kreise sind nicht mehr konzentrisch und die Kreisbahn ist einseitig abgeflacht. Liegt der einfallende Laserstrahl genau auf der Drehachse des Prismas so rotiert der Laserstrahl nach dem Prisma aufgrund der Geometriefehler auf einer Kreisbahn mit der gleichen Winkelgeschwindigkeit wie das Prisma anstatt nur in sich selbst.

Diese Unzulänglichkeiten, welche in der Literatur bereits beschrieben wurden und bislang als nicht ausgleichbar galten, werden mit der erfindungsgemäßen Anordnung, die ausgangsseitig des Bildrotators eine Ausgleichseinrichtung besitzt, beseitigt.

In einer bevorzugten Ausführungsform umfasst die Parallelversatzeinheit, die Teil der Ausgleichsvorrichtung ist, eine planparallele Platte, die vorzugsweise senkrecht zu der Achse des Laserstrahls kippbar bzw. drehbar gehalten ist. Durch Verstellen der planparallelen Platte unter kleinen Winkeln zu der Achse des Laserstrahls wird der durch fertigungsbedingte Fehler des Bildrotators hervorgerufene Versatz der Laserstrahlung von der Lage des durch einen ideal gefertigten Bildrotator hindurchgeleiteten Laserstrahls ausgeglichen.

Das zweite Bauteil, das Teil der Ausgleichsvorrichtung ist, ist eine Winkeländerungseinheit, die vorzugsweise zwei Keilplatten aufweist, welche jede für sich senkrecht zur Rotationsachse des Bildrotators und der Ausgleichsvorrichtung, und damit auch senkrecht zur Achse des Laserstrahls, drehbar angeordnet sind. Mit diesen zwei Keilplatten, die darüber hinaus vorzugsweise entgegengesetzte Keilwinkel aufweisen, wird die durch fertigungsbedingte Fehler des Bildrotators hervorgerufene Winkeländerung der Laserstrahlung von der Lage des durch einen ideal gefertigten Bildrotator hindurchgeleiteten Laserstrahls ausgeglichen.

Die zwei Keilplatten und die planparallele Platte sollten gegeneinander in ihrer Grundstellung einstellbar gehalten sein; hierzu können geeignete Stellelemente vorgesehen werden. Darüber hinaus können diese Teile in einer Hohlwelle montiert sein, die sich in ihrer Grundeinstellung in einer festen Zuordnung zu dem Bildrotator dreht.

Wie bereits eingangs erwähnt, kann der Bildrotator in seiner einfachsten Bauform durch ein Prisma gebildet sein. Darüber hinaus kann für den Bildrotator ein Dove-Prisma eingesetzt werden.

Das Prisma in dem Bildrotator sollte so angeordnet sein, dass bei einer einmaligen Drehung des Bildrotators eine mehrmalige Drehung, im einfachsten Fall eine zweimalige Drehung, eines durch das Prisma geführten Laserstrahls erfolgt.

Mit der erfindungsgemäßen Anordnung können die systembedingten Beschränkungen beispielsweise eines Dove-Prismas als Element einer schnell rotierenden Laserstrahl-Bohroptik eliminiert werden.

Für einen einfachen Aufbau ist der Bildrotator in einem Hohlwellenmotor angeordnet.

Während ein Dove-Prisma als Bildrotator dann zu bevorzugen ist, wenn ein kostengünstiger Aufbau angestrebt wird und eine Laserstrahlquelle mit einer von dem Prisma hochtransmitierenden Wellenlänge benutzt wird, sollte eine starre K-Spiegelanordnung als Bildorator dann eingesetzt werden, wenn im Gesamtaufbau Strahlquellen verschiedener Wellenlängen benutzt werden.

Eine solche K-Spiegelanordnung kann auch einstellbar für solche Fälle aufgebaut werden, bei denen die Justage des Bildrotators gegenüber dem Hohlwellenmotor, z.B. durch Temperaturschwankungen, problematisch ist.

Anstelle eines Dove-Prismas könnte auch ein Abbe-König-Prisma als Bildrotator verwendet werden.

Die zwei Keilplatten, die bevorzugt als Wnkeländerungseinheit in der Ausgleichsvorrichtung eingesetzt werden, können in Strahlrichtung gesehen benachbart zueinander angeordnet werden; dadurch können mit einer einfachen Anordnung beide Keilplatten in fester Zuordnung zueinander gedreht werden.

Um Einstrahlposition und Einstrahlwinkel des Laserstrahls einstellen zu können, sind hierzu im Strahlmanipulator entsprechende Bauteile vorgesehen. Bei diesen Einstelleinheiten kann es sich um hoch dynamische Stellglieder handeln.

Ein solcher Strahlmanipulator hat; beispielsweise gegenüber rotierenden Keilplattenanordnungen, den Vorteil, dass die zur Einstellung von Rotationsdurchmesser und Einstrahlwinkel notwendigen optischen Elemente nicht mitrotieren. Dies vereinfacht den mechanischen Aufbau und bewirkt eine deutliche Reduzierung der Baugröße. Darüber hinaus lassen sich mit dieser Anordnung in Verbindung mit einem Bildrotator wesentlich höhere Rotationsgeschwindigkeiten bis zu 1000 Hz erreichen. Systembedingt bedeutet dies, dass das Prisma nur mit 500 Hz rotieren muss, da bei einer Umdrehung des Prismas der Laserstrahl doppelt rotiert.

Um notwendige hohe Ablenkfrequenzen von bis zu 1000 Hz realisieren zu können, sollten hoch dynamische Ablenksysteme wie z.B. Torsions- und Kippspiegel auf der Basis von Lithiumniobat, verwendet werden.

So können in Ausführungsformen der Erfindung für die Einstellung der Strahlablenkung und damit des Rotationsdurchmessers in dem Strahlmanipulator hoch dynamische Scanner verwendet werden. Mit einer Synchronisation von Rotationswinkel und Strahlauslenkung können dann beliebige Bohrlochformen, wie z.B. Rechtecke und Freiformen, realisiert werden, die z.B. für Spinndüsen in der Kunstfaserherstellung benötigt werden.

Eine in Strahlrichtung nach der Ausgleichsvorrichtung vorgesehene Fokussiereinrichtung sollte vorzugsweise zusätzlich in Strahlrichtung verschiebbar angeordnet sein, um den Fokus auf dem Werkstück oder die Fokustiefe vor und während der Bearbeitung einstellen zu können.

Zur Einstellung der Einstrahlposition des Laserstrahls in den Bildrotator und damit des Eintrittsbohrungsdurchmessers sowie zur Einstellung des Einstrahlwinkels und damit des Austrittsbohrungsdurchmessers können eine drehbare Keilplatte, die senkrecht zum Strahlengang drehbar angeordnet ist, und ein gemeinsam mit der Keilplatte in Strahlpropagationsrichtung verschiebbarer Spiegel eingesetzt werden. Mit dieser Anordnung kann die Einstellung der beiden Einstellparameter gemeinsam vorgenommen werden; falls beispielsweise der Eintrittsdurchmesser durch Verstellen der Keilplatte verändert wird, der Austrittsdurchmesser aber gleich bleiben soll, wird der Einstrahlwinkel durch Verschieben des Spiegels und der Keilplatte entsprechend angepasst.

Die Polarisation der Laserstrahlung ist eine wichtige Größe zur Erzeugung und Beherrschung hoher Bohrungsqualitäten. Unterschiedliche Polarisationsrichtungen der Laserstrahlung auf einem Umlauf der Laserstrahlung führen zu unterschiedlichen Abtragsergebnissen. Aus diesem Grund ist es von Vorteil, die Polarisation definiert zur Einfallsebene mitrotieren zu lassen oder zirkular polarisiertes Laserlicht zu verwenden; hierzu sind jedoch besondere optische Elemente notwendig, die ebenfalls mitrotieren müssen. Um die Polarisation mitzudrehen, wird zwischen Strahlmanipulator und Bildrotator eine synchron zum Bildrotator mitrotierende λ/2-Platte angeordnet.

Alternativ dazu kann bei linear polarisierter Strahlung diese durch Verwendung einer stillstehenden λ/4-Platte- in zirkular polarisierte Strahlung umgewandelt werden, wodurch die polarisationsbedingten Abtragsschwankungen verringert werden.

In einer besonderen Ausführungsform der Erfindung wird ein Dove-Prisma mit einem speziellen Trapezwinkel verwendet, bei dem sich die polarisationsbedingten Leistungsschwankungen des ausgehenden Laserstrahls minimieren und somit entlang Einer Strahlrotation keine Auswirkungen auf die Bohrlochform zu erkennen sind. Das Prisma des Bildrotators sollte einen Trapezwinkel aufweisen, unter dem die polarisationsbedingten Abtragsschwankungen bei einer Urndrehung des Prismas minimiert werden. Hierbei sollte der Trapezwinkel möglichst groß werden, was aber die Baulänge der Drehoptik wresentlich vergrößert, so dass vorrichtungsbedingt zwischen großem Trapezwinkel und maximal möglicher Baulänge abzuwägen ist.

Falls nicht rotationssymmetrische Bohrungen erzeugt werden sollen, können die Elemente des Strahlmanipulators synchron zur Rotationsbewegung des Bildrotators bewegbar angeordnet werden.

Die erfindungsgemäße Vorrichtung findet besondere Anwendung auf den Gebieten, die eingangs anhand des Stands der Technik erläutert wurden.

Weitere Vorteile und Merkmale der Erfindung ergeben sich aus der nachfolgenden Beschreibung von Ausführungsbeispielen anhand der Zeichnungen. In der Zeichnung zeigt
- Figur 1: eine erfindungsgemäße Vorrichtung mit einem Blldrotator in Form eines Do- ve-Prismas,
- Figur 2: eine Detailansicht des Bildrotators, der Ausgleichseinrichtung und der Fo- kussiereinrichtung der Figur 1,
- Figur 3: eine Ansicht, die derjenigen der Figur 2 entspricht, allerdings mit einem Do- ve-Prisma mit vergrößertem Trapezwinkel,
- Figur 4: eine Ansicht entsprechend der Figuren 2 und 3, in der ein Abbe-König- Prisma als Bildrotator eingesetzt ist,
- Figur 5: eine Ansicht entsprechend der Figuren 2 bis 4, in der eine K- Spiegelanordnung, die starr ausgebildet ist, eingesetzt ist,
- Figur 6: eine Anordnung entsprechend der Figur 5, allerdings mit einer einstellbaren K-Spiegelanordnung,
- Figur 7: eine Darstellung entsprechend der Figur 1, wobei, gegenüber der Vorrich- tung der Figur 1, eingangsseitig des Strahlmanipulators eine λ/4-Platte an- geordnet ist, und
- Figur 8: eine Darstellung entsprechend der Figur 1, wobei, gegenüber der Vorrich- tung der Figur 1, ausgangsseitig des Strahlmanipulators eine λ/2-Platte an- geordnet ist.

Die Vorrichtungen, wie sie in den Figuren dargestellt sind, sind zum Bohren und für den Materialabtrag mittels Laserstrahl vorgesehen.

Die Vorrichtung kann in einen Strahlmanipulator 1, einen Bildrotator 2, eine Ausgleichsvorrichtung 3 und eine Fokussiereinrichtung 4, in Richtung des Verlaufs eines Laserstrahls, der mit dem Bezugszeichen 5 bezeichnet ist, gesehen, untergliedert werden.

Der Bildrotator 2, der in einem sich schnell rotierenden Hohlwellenmotor 6, in dessen Mitte, angeordnet ist, bildet eine Bohroptik, wobei in der dargestellten Ausführungsform als Bildrotator 2 ein Dove-Prisma 7 eingesetzt ist. Das Dove-Prisma 7 ist so in dem Hohlwellenmotor 6 positioniert, dass bei einer einmaligen Drehung des Bildrotators 2 bzw. des Hohlwellenmotors 6, durch den Drehpfeil 8 angedeutet, eine zweimalige Drehung des durch das Prisma 7 geleiteten Laserstrahls 5 bewirkt wird, was durch die zwei Drehpfeile 8' ausgangsseitig des Hohlwellenmotors 6 angedeutet ist.

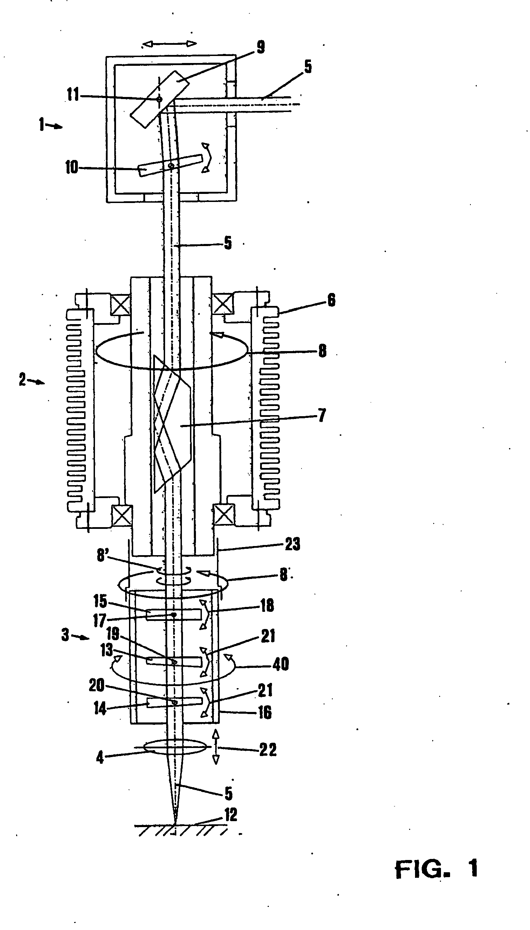

Der Strahlmanipulator 1, der, in Strahlrichtung des Lasers 5 gesehen, vor dem Hohlwellenmotor 6 angeordnet ist, ist aus zwei Einstellvorrichtungen, mit den Bezugszeichen 9 und 10 bezeichnet, aufgebaut; bei der Einstellvorrichtung 9 handelt es sich um eine solche Einrichtung, die zum Einstellen der Einstrahlposition des Laserstrahls 5 dient, wozu der in Figur 1 gezeigte Spiegel 9 um eine Achse 11 drehbar bzw. kippbar gehalten ist (die Achse 11 verläuft senkrecht zu der Strahlrichtung des Laserstrahls 5). Die Einstellvorrichtung 10 dient zum Einstellen des Einstrahlwinkels des auf das Prisma 7 des Bildrotators 2 geleiteten Laserstrahls 5. Die beiden Einstellvorrichtungen 9, 10 können mit hoch dynamischen Stellgliedern, wie z.B. Piezoverstellem und Festkörper-Kippverstellern, versehen sein, die nicht näher in den Figuren dargestellt sind, um nichtrotationssymmetrische Bohrungen in der Bearbeitungsebene, mit dem Bezugszeichen 12 bezeichnet, realisieren zu können.

In Strahlrichtung des Laserstrahls 5 gesehen befinden hinter dem Hohlwellenmotor 6 zwei einstellbare Keilplatten 13 und 14 sowie eine planparallele Platte 15. Diese planparallele Platte sowie diese zwei einstellbaren Keilplatten 13, 14 sind in einer um die Rotationsachse konzentrisch drehbaren Hülse 16 gehalten. Die planparallele Platte 15, die, in Strahlrichtung gesehen, unmittelbar nach dem Hohlwellenmotor 6 bzw. dem Bildrotator 2 angeordnet ist, bildet eine Parallelversatzeinheit für den Laserstrahl 5, während die beiden Keilplatten 13, 14, die, in Strahlrichtung gesehen, der planparallelen Platte 15 folgen, eine Winkeländerungseinheit für den Laserstrahl 5 bilden. Mit dieser Ausgleichsvorrichtung 3 kann der aufgrund von Geometrie- und Lagefehlern des Dove-Prismas aus der Mitte herausgeführte Laserstrahl 5 zur Mitte, d.h. zur Rotationsachse des Bildrotators 2, zurück justiert werden.

Für eine solche Einstellung kann die planparallele Platte 15 um eine Achse 17 senkrecht zu der Strahlachse bzw. der Achse des Hohlwellenmotors 6 gekippt werden, wie durch den Doppelpfeil 18 angedeutet ist. Gleiches gilt für die beiden Keilplatten 13 und 14, die um jeweilige Achsen 19 und 20, senkrecht zu der Strahlachse verlaufend, kippbar sind, angedeutet durch die beiden mit dem Bezugszeichen 21 gekennzeichneten Doppelpfeilen. Um den Winkelfehler (Parallelversatz) mit den beiden Keilplatten 13, 14 zu korrigieren, weisen diese beiden Keilplatten entgegengesetzte Keilwinkel auf, wie in Figur 1 zu erkennen ist. Allerdings müssen diese Keilwinkel nicht von gleicher Größe sein.

Auch können die beiden Keilplatten 13 und 14 sowie die planparallele Platte 15 in einer anderen Zuordnung zueinander und unter anderen Abständen zueinander innerhalb der Ausgleichsvorrichtung 3 angeordnet werden, jeweils in Abhängigkeit von der Geometrie der Plan- und Keilplatten. Wesentlich ist aber, dass diese optischen Teile der Ausgleichsvorrichtung in der Hülse 16 angeordnet sind, um sie innerhalb dieser Hülse 16 zu justieren und damit den Laserstrahl einzustellen, so dass sich dann, nach vorgenommener Einstellung, diese Teile in fester Zuordnung zusammen mit dem Bildrotator 2 drehen, wozu die Hülse 16 der Ausgleichsvorrichtung 3 über das angedeutete Kopplungsteil 23 verbunden ist. Durch diese Kopplung über die Hülse 16 drehen sich Hohlwellenmotor 6 bzw. Bildrotator 2 und Ausgleichsvorrichtung 3 bzw. die Hülse 16 mit gleicher Drehgeschwindigkeit.

Die in Strahlrichtung gesehen hinter der Ausgleichsvorrichtung 3 angeordnete fokussierienrichtung 4 kann aus einer oder mehreren Fokussierlinsen zusammengesetzt sein, obwohl in Figur 1 nur eine einzelne Linse dargestellt ist, mit der der Laserstrahl 5 auf das Werkstück bzw. die Bearbeitungsebene 12 fokussiert wird. Diese Fokussiervorrichtung 4 kann zusätzlich in Strahlrichtung, angedeutet durch den Doppelpfeil 22, verschoben werden, um bei tiefen Bohrungen eine Nachführung des Laserstrahlfokus zu ermöglichen und die Geometrie der Bohrung zu ändern.

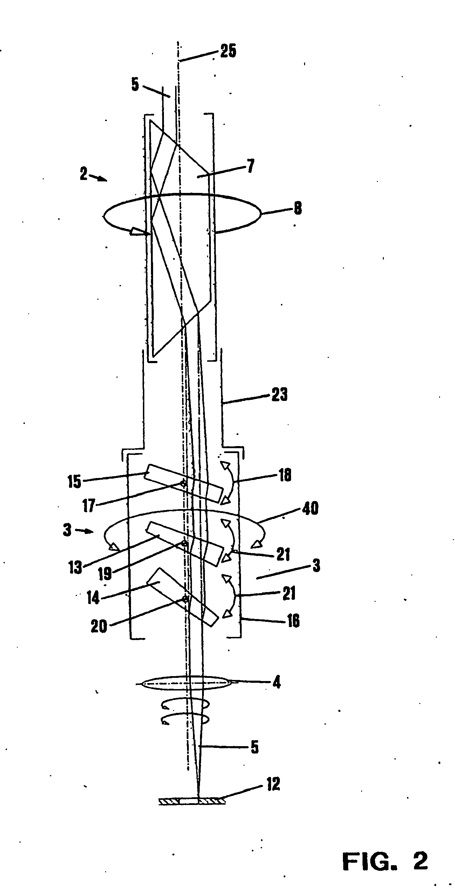

In der Figur 2 wird der Verlauf des Laserstrahls 5 durch das Prisma 7, die planparallele Platte 15 sowie die beiden Keilplatten 13 und 14 verdeutlicht.

Der in das Prisma 7 eintretende Strahl 5 ist durch entsprechende Reflexion in dem Prisma 7 sowie der Beugung an der Austrittsfläche des Prismas 7 versetzt. Durch die fertigungsbedingten Toleranzen weicht der aus dem Prisma 7 ausfallende Laserstrahl 5 in Lage und Winkel von einem Laserstrahl ab, welcher sich nach Durchgang durch ein ideales Prisma ergeben würde, wie anhand von Figur 2 zu erkennen ist. In Figur 2 ist die Ausgleichsvorrichtung 3 derartig gegenüber dem Prisma 7 koaxial verdreht, dass die Achsen der planparallelen Platte 15 und der Keilplatten 13, 14 normal auf der Fläche stehen, welche durch die Laserstrahlen 5 gebildet wird. Hierdurch wird die räumliche Lage- und Winkelabweichung in eine ebene Abweichung übertragen (die Drehbewegung der Ausgleichsvorrichtung 3 gegenüber dem Prisma 7 ist durch Doppelpfeil 40 angedeutet).

Für die Winkeländerung sind die Keilplatten 13 und 14 vorgesehen, die, aufgrund ihres Keilwinkels und der Orientierung des Keilwinkels zu dem eintretenden Laserstrahl sowie ihrer Kippung um ihre jeweilige Achse 19, 20, den Winkel des Laserstrahls 5 auf den Winkel des idealen Laserstrahls ändem. Durch die Keilplatten 13 und 14 erfährt der Laserstrahl 5 auch eine Lageverschiebung. Durch die planparallele Platte 15 wird die Lage des Laserstrahls 5 geändert, ohne eine Winkeländerung des Strahls 5 zu erzeugen. Dies bewirkt, dass der Laserstrahl 5 des realen Prismas 7 auf die Position des idealen Laserstrahls einjustiert werden kann.

Anhand der Darstellung der Figur 2 ist zu erkennen, dass es mit der Ausgleichsvorrichtung 3 möglich ist, eine durch fertigungsbedingte Fehler des Bildrotators 2 hervorgerufenen räumlichen Lage und einen Winkelversatz eines Laserstrahls 5 auszugleichen.

Es ist darauf hinzuweisen, dass, soweit in den einzelnen Figuren Bauteile gezeigt sind, die mit Bauteilen anderer Figuren identisch oder vergleichbar sind, entsprechende Bezugszeichen verwendet sind, so dass die Ausführungen zu einer Ausführungsform entsprechend auf andere Ausführungsformen übertragen werden können.

Auch ist in den einzelnen Figuren 2 bis 8 der jeweilige ideale Strahlengang der Laserstrahlung mit strichpunktierten Linien dargestellt, während der auftretende Strahlengang (mit Geometrie- und Lagefehler der Prismen) mit durchgezogenen Linien gezeigt ist.

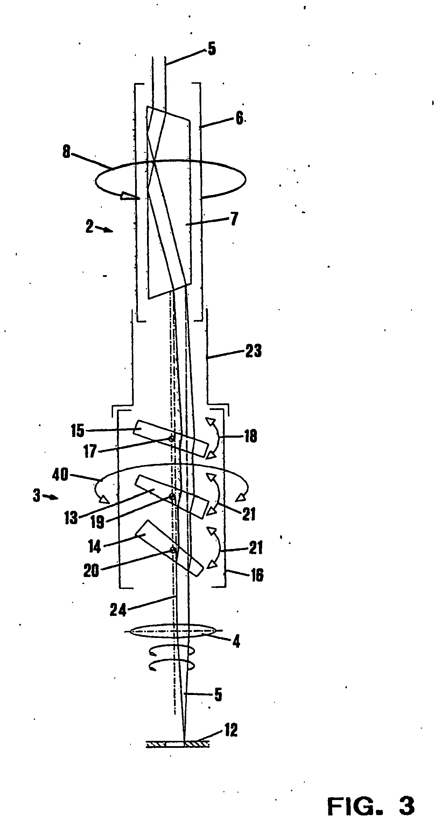

In Figur 3 ist ein Dove-Prisma 7 gezeigt, das gegenüber dem Dove-Prisma der Figur 2 einen vergrößerten Trapezwinkel besitzt. Ein solches Dove-Prisma 7 mit vergrößertem Trapezwinkel dient dazu, polarisationsbedingte Abtragsschwankungen bei einem Umlauf der Laserstrahlung zu minimieren.

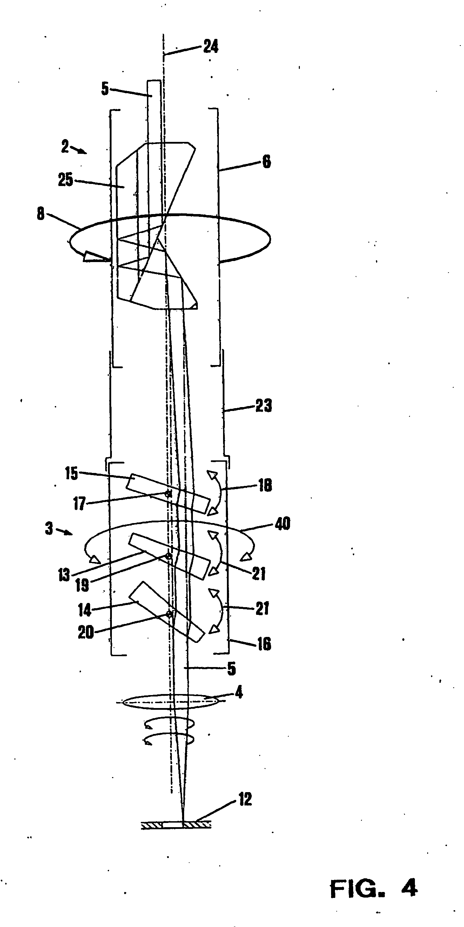

In der Ausführungsform der Figur 4 nun ist als Bildrotator ein Abbe-König-Prisma 25 eingesetzt. Das Abbe-König-Prisma 25 stellt eine Alternative zu einem Dove-Prisma 7, wie es in den Figuren 2 und 3 gezeigt ist, dar.

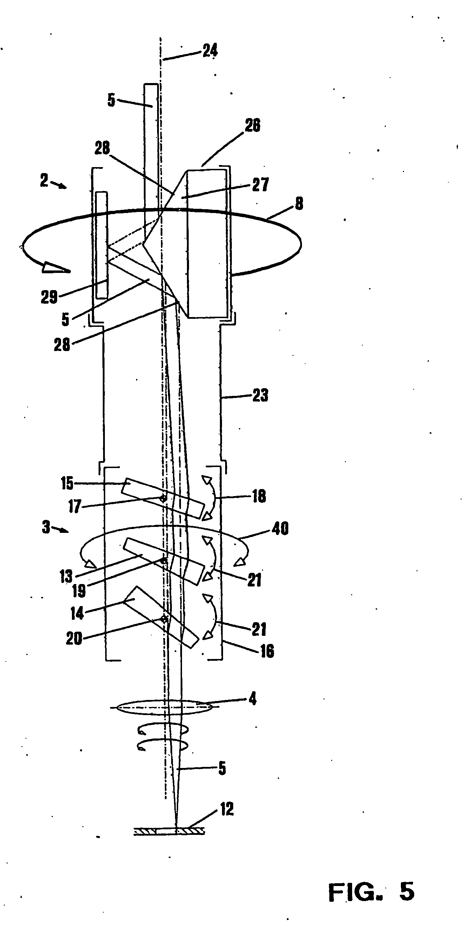

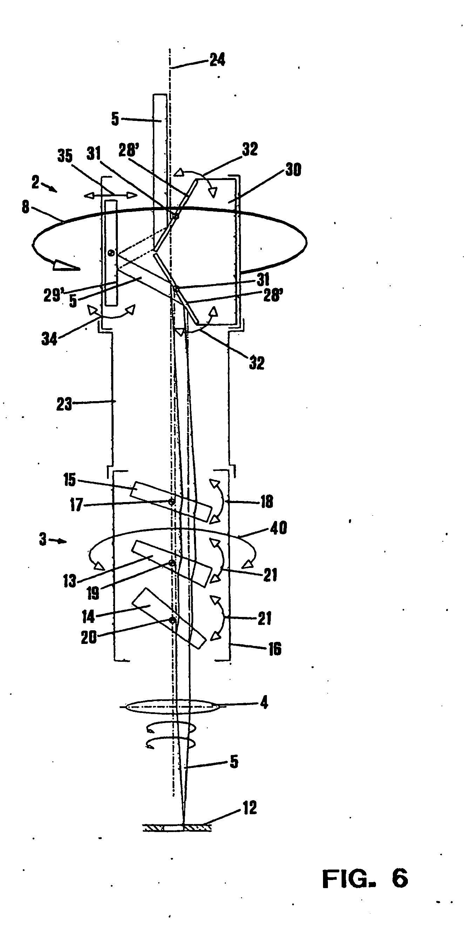

Anstelle eines Dove-Prismas 7 oder eines Abbe-König-Prismas 25 kann in dem Bildrotator 2 auch eine K-Spiegelanordnung 26 eingesetzt werden. Eine solche K-Spiegelanordnung 26, die ebenfalls als Bildrotator bekannt ist, umfasst eine aus zwei Spiegelflächen 28 aufgebaute, dachförmige Spiegelanordnung 27 und eine diesen Spiegelflächen 28 gegenüberliegende weitere Spiegelfläche 29, die so positioniert sind, dass der auf die erste Spiegelfläche 28 auftreffende Laserstrahl 5 zu der weiteren Spiegelfläche 29 hin gerichtet wird, und von dort auf die andere Spiegelfläche 28 fällt, um von dort in Richtung der Achse 24 der Anordnung weitergeführt zu werden. Auch bei dieser K-Spiegelanordnung 26, mit feststehenden, d.h. starren, Spiegelflächen 28 und 29, tritt wiederum das Problem auf, dass der von der K-Spiegelanordnung 26 austretende Laserstrahl 5 nicht parallel zur Achse 28 verläuft, so dass wiederum eine entsprechende Korrektur über die Ausgleichsvorrichtung 3, wie sie vorstehend beschrieben ist, vorgenommen werden muss. Während die Figur 5 eine starre K-Spiegelanordnung 26 zeigt, ist in Figur 6 eine Ausführungsvariante dargestellt, bei der eine K-Spiegelanordnung 30 eingesetzt wird, die einstellbar aufgebaut ist, indem die beiden Spiegelflächen 28' voneinander entkoppelt sind und um jeweilige Achsen 31 einstellbar sind, wie durch die Schwenkpfeil 32 angedeutet ist, und darüber hinaus der weitere Spiegel 29' sowohl um eine Achse 33 in Richtung des Pfeils 34 schwenkbar ist und darüber hinaus in Richtung des Doppelpfeils 35 in seinem Abstand senkrecht zu der Achse 24 verschiebbar ist. Mit diesen Einstellmöglichkeiten können Lagefehler des Bildrotators gegenüber dem Hohlwellenmotor ausgeglichen werden.

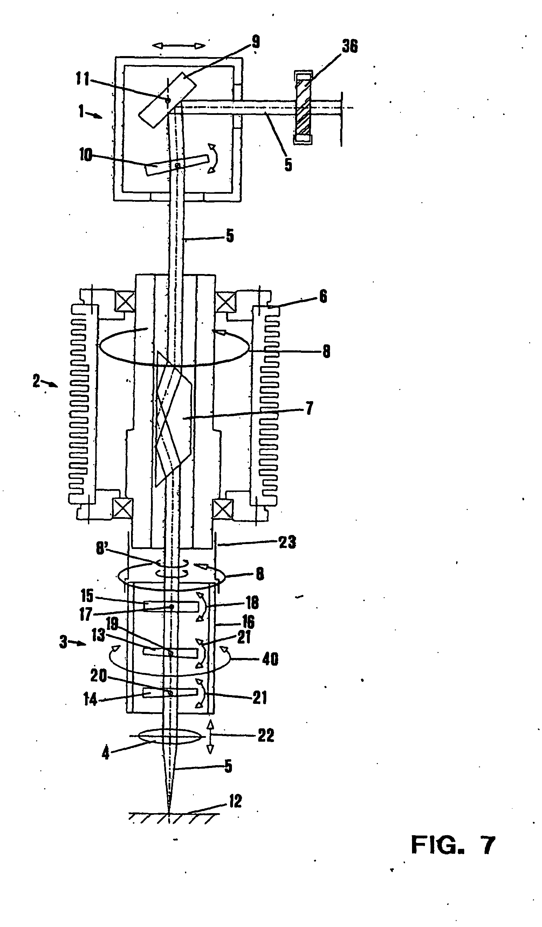

In Figur 7 ist die Anordnung der Figur 1 gezeigt, allerdings mit einer zusätzlichen λ/4-Platte 36, die eingangsseitig des Strahlmanipulators 1 im Strahlengang des Laserstrahls 5 angeordnet ist. Diese λ/4-Platte 36 dient dazu, linear polarisierte Laserstrahlung in zirkular polarisierte Laserstrahlung umzuwandeln. Ansonsten ist der Aufbau der Vorrichtung der Figur 7 identisch zu demjenigen, der in Figur 1 dargestellt und anhand der Figur 1 beschrieben ist.

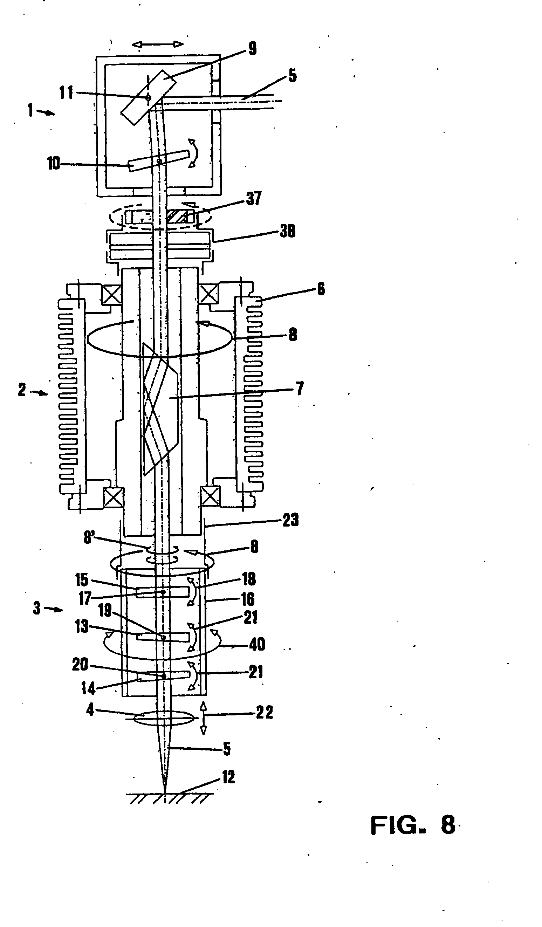

Schließlich zeigt die Figur 8 eine Vorrichtung, die vergleichbar mit derjenigen der Figur 1 ist, allerdings mit einer zusätzlichen λ/2-Platte 37, die ausgangsseitig des Strahlmanipulators 1 im Strahlengang des Laserstrahls 5 positioniert ist. Diese λ/2-Platte 37 ist an einer Rotations-Einheit 38 montiert, die aus einem Getriebe und zwei Kopplungen, jeweils zwischen Getriebe und Hohlwellenmotor und zwischen Getriebe und λ/2-Platte 37, besteht, mit der die λ/2-Platte 37 koaxial zum Hohlwellenmotor 6 in Rotation versetzt wird. Eine solche λ/2-Platte 37 dient dazu, die Polarisation der Laserstrahlung mitzudrehen, wodurch polarisationsbedingte Abtragsschwankungen auf einem Umlauf der Laserstrahlung minimiert werden.

Die λ/4-Platte 36 der Figur 7 sowie die λ/2-Platte 37 der Figur 8 können in den anderen Vorrichtungen, die in den Figuren 2 bis 6 gezeigt sind, an entsprechender Stelle, wie sie in den Figuren 7 oder 8 gezeigt sind, eingesetzt werden.

## Patentansprüche

1. Vorrichtung zum Bohren und für den Materialabtrag mittels Laserstrahl,
die einen drehenden Bildrotator (2),
einen in Strahlrichtung gesehen vor dem Bildrotator (2) angeordneten Strahlmanipulator (1) für die Winkel- und Lageeinstellung des Strahls (5) relativ zur Rotationsachse des Bildrotators und
eine Fokussiereinrichtung (4) ausgangsseitig des Bildrotators aufweist,
**dadurch gekennzeichnet, dass**
zwischen Bildrotator (2) und Fokussiereinrichtung (4) eine Ausgleichsvorrichtung (3) angeordnet ist, die in gleicher Drehrichtung und mit gleicher Drehfrequenz mit dem Bildrotator (2) dreht, wobei die Ausgleichsvorrichtung (3) eine Parallelversatzeinheit (15) und Winkeländerungseinheit (13, 14) aufweist, und
dass die Ausgleichsvorrichtung (3; 13, 14, 15) in ihrer relativen Drehposition zu dem Bildrotator (2) in einer dann als Grundeinstellung dienenden Korrekturjustage einstellbar ist, wobei diese Grundeinstellung dann für alle Einstrahlpositionen und -winkel des Bildrotators beibehalten wird.

2. Vorrichtung nach Anspruch 1, **dadurch gekennzeichnet, dass** die Parallelversatzeinheit eine planparallele Platte (15) umfasst.

3. Vorrichtung nach Anspruch 2, **dadurch gekennzeichnet, dass** die planparallele Platte (15) senkrecht zur Rotationsachse drehbar ist.

4. Vorrichtung nach einem der Ansprüche 1 bits 3, **dadurch gekennzeichnet, dass** die Winkeländerungseinheit zwei Keilplatten (13, 14) aufweist, welche jede für sich senkrecht zur Rotationsachse drehbar ist.

5. Vorrichtung nach Anspruch 4, **dadurch gekennzeichnet, dass** die zwei Keilplatten (13, 14) entgegengesetzte Keilwinkel aufweisen.

6. Vorrichtung nach Anspruch 2 und Anspruch 4, **dadurch gekennzeichnet, dass** die zwei Keilplatten (13, 14) und die planparallele Platte (15) gegeneinander in ihrer Grundstellung einstellbar gehalten sind.

7. Vorrichtung nach einem der Ansprüche 1 bis 6, **dadurch gekennzeichnet, dass** der Bildrotator (2) durch ein Prisma (7; 25) gebildet ist.

8. Vorrichtung nach Anspruch 7, **dadurch gekennzeichnet, dass** der Bildrotator (2) durch ein Dove-Prisma (7) gebildet ist.

9. Vorrichtung nach Anspruch 6 oder 7, **dadurch gekennzeichnet, dass** das Prisma (7; 25) in dem Bildrotator (2) so angeordnet ist, dass bei einer einmaligen Drehung des Bildrotators (2) eine zweimalige Drehung eines durch das Prisma (7; 25) geführten Laserstrahls (5) erfolgt.

10. Vorrichtung nach Anspruch 1, **dadurch gekennzeichnet, dass** der Bildrotator (2) durch eine starre K-Spiegelanordnung (26) gebildet ist.

11. Vorrichtung nach Anspruch 7, **dadurch gekennzeichnet, dass** der Bildrotator (2) durch ein Abbe-König-Prisma (25) gebildet ist.

12. Vorrichtung nach Anspruch 4, **dadurch gekennzeichnet, dass** die zwei Keilplatten (13, 14) benachbart zueinander angeordnet sind.

13. Vorrichtung nach einem der Ansprüche 1 bis 12, **dadurch gekennzeichnet, dass** der Bildrotator (2) in einem Hohlwellenmotor (6) angeordnet ist.

14. Vorrichtung nach einem der Ansprüche 1 bis 13, **dadurch gekennzeichnet, dass** der Strahlmanipulator (1) zur Einstellung von Einstrahlposition und zur Einstellung von Einstrahlwinkel jeweils eine Einstellvorrichtung (9, 10) aufweist.

15. Vorrichtung nach Anspruch 14, **dadurch gekennzeichnet, dass** die jeweilige Einstellvorrichtung (9, 10) hoch dynamische Stellglieder umfasst.

16. Vorrichtung nach einem der Ansprüche 1 bis 14, **dadurch gekennzeichnet, dass** die Teile (13, 14, 15) der Ausgleichsvorrichtung (3) in einer um die Achse des Bildrotators (2) konzentrisch drehbaren Hülse (16) angeordnet sind.

17. Vorrichtung nach einem der Ansprüche 1 bis 16, **dadurch gekennzeichnet, dass** in Strahlrichtung gesehen nach der Ausgleichsvorrichtung (3) eine fokussiereinrichtung (4) vorgesehen ist, die zusätzlich in Strahlrichtung (22) verschiebbar angeordnet ist.

18. Vorrichtung nach Anspruch 14, **dadurch gekennzeichnet, dass** die Einstrahlposition und damit der Eintrittsbohrungsdurchmesser sowie der Einstrahlwinkel und damit der Austrittsbohrungsdurchmesser durch eine senkrecht zum Strahlengang drehbare Keilplatte (10) und einem gemeinsam mit der Keilplatte in Strahlpropagationsrichtung verschiebbaren Spiegel (9) einstellbar ist.

19. Vorrichtung nach Anspruch 7, **dadurch gekennzeichnet, dass** das Prisma (7) einen Trapezwinkel aufweist, unter dem die polarisationsbedingte Intensitätsschwankung bei einer Umdrehung des Prismas (7) minimiert wird.

20. Vorrichtung nach einem der Ansprüche 1 bis 19, **dadurch gekennzeichnet, dass** zwischen Strahlmanipulator (1) und Bildrotator (2) eine synchron zum Bildrotator (2) mitrotierende λ/2-Platte (37) angeordnet ist, um die Polarisation mitzudrehen.

21. Vorrichtung nach Anspruch 14, **dadurch gekennzeichnet, dass** die Elemente des Strahlmanipulators (1) synchron zur Rotationsbewegung des Bildrotators (2) bewegbar sind, um **dadurch** nicht rotationssymmetrische Bohrungen zu erzeugen.

22. Vorrichtung nach Anspruch 1, **dadurch gekennzeichnet, dass** der Bildrotator durch eine in ihren spiegelnden Flächen (28', 29') zueinander einstellbare K-Spiegelanordnung (30) gebildet ist.

23. Vorrichtung nach einem der Ansprüche 1 bis 22, **dadurch gekennzeichnet, dass** vor dem Strahlmanipulator (1) eine senkrecht zur Strahlpropagationsrichtung einstellbare λ/4-Platte (36) angeordnet ist.

## Claims

1. A device for drilling and for removing material using a laser beam, said device comprising:
a rotating image rotator (2);
a beam manipulator (1) which, when viewed in beam direction, is arranged in front of the image rotator (2) and serves to adjust the angle and position of the beam (5) relative to the rotation axis of the image rotator; and
a focusing device (4) located on the output side of the image rotator,
**characterized in that**
a compensating device (3) is arranged between image rotator (2) and focusing device (4) and rotates with the image rotator (2) in the same direction of rotation and at the same rotational frequency, the compensating device (3) comprising a parallel displacement unit (15) and an angle changing unit (13, 14), and
that the compensating device (3; 13, 14, 15) is adjustable in its rotating position relative to the image rotator (2) in a correction adjustment which then serves as basic setting, said basic setting being then maintained for all incident beam positions and angles of the image rotator.

2. The device according to claim 1, **characterized in that** the parallel displacement unit comprises a plane-parallel plate (15).

3. The device according to claim 2, **characterized in that** the plane-parallel plate (15) is rotatable in a direction perpendicular to the rotation axis.

4. The device according to any one of claims 1 to 3, **characterized in that** the angle changing unit comprises two wedge plates (13, 14), each being rotatable on its own in a direction perpendicular to the rotation axis.

5. The device according to claim 4, **characterized in that** the two wedge plates (13, 14) have opposite wedge angles.

6. The device according to claim 2 and claim 4, **characterized in that** the two wedge plates (13, 14) and the plane-parallel plate (15) are adjustably mounted relative to one another in their basic setting.

7. The device according to any one of claims 1 to 6, **characterized in that** the image rotator (2) is formed by a prism (7; 25).

8. The device according to claim 7, **characterized in that** the image rotator (2) is formed by a Dove prism (7).

9. The device according to claim 6 or 7, **characterized in that** the prism (7; 25) is arranged in the image rotator (2) such that, when the image rotator (2) is rotated once, a laser beam (5) passed through the prism (7; 25) is rotated twice.

10. The device according to claim 1, **characterized in that** the image rotator (2) is formed by a rigid K-mirror arrangement (26).

11. The device according to claim 7, **characterized in that** the image rotator (2) is formed by an Abbe-Koenig prism (25).

12. The device according to claim 4, **characterized in that** the two wedge plates (13, 14) are arranged adjacent to each other.

13. The device according to any one of claims 1 to 12, **characterized in that** the image rotator (2) is arranged in a hollow shaft motor (6).

14. The device according to any one of claims 1 to 13, **characterized in that** the beam manipulator (1) comprises a respective adjusting device (9, 10) for adjusting at least one of the incident beam position and the incident beam angle.

15. The device according to claim 14, wherein the respective adjusting device (9, 10) comprises highly dynamic actuators.

16. The device according to any one of claims 1 to 14, **characterized in that** the parts (13, 14, 15) of the compensating device (3) are arranged in a sleeve (16) concentrically rotatable about the axis of the image rotator (2).

17. The device according to any one of claims 1 to 16, **characterized in that**, when viewed in beam direction, a focusing device (4) is provided after the compensating device (3), the focusing device being additionally arranged to be displaceable in beam direction (22).

18. The device according to claim 14, **characterized in that** the incident beam position, and thus the entrance bore diameter, and the incident beam angle, and thus the exit bore diameter, are adjustable by a wedge plate (10), which is rotatable in a direction perpendicular to the optical path, and by a mirror (9) which is displaceable together with the wedge plate in beam propagation direction.

19. The device according to claim 7, **characterized in that** the prism (7) has a trapezoid angle under which the polarization-induced intensity variation in one rotation of the prism (7) is minimized.

20. The device according to any one of claims 1 to 19, **characterized in that** a λ/2 plate (37), which is co-rotating in synchronism with the image rotator (2), is arranged between beam manipulator (1) and image rotator (2) to co-rotate the polarization.

21. The device according to claim 14, **characterized in that** the elements of the beam manipulator (1) are movable in synchronism with the rotational movement of the image rotator (2) so as to produce nonrotation-symmetrical bores.

22. The device according to claim 1, **characterized in that** the image rotator is formed by a K-mirror arrangement (30) which is adjustable in its reflecting surfaces (28', 29') relative to each other.

23. The device according to any one of claims 1 to 22, **characterized in that** a λ/4 plate (36), which is adjustable in a direction perpendicular to the beam propagation direction, is arranged in front of the beam manipulator (1).

## Revendications

1. Dispositif pour le perçage et pour l'enlèvement de matière par faisceau laser qui présente un rotateur d'image rotatif (2),
un manipulateur de faisceau (1) disposé en amont du rotateur d'image (2) vu dans la direction de faisceau, pour le réglage d'angle et de position du faisceau (5) par rapport à l'axe de rotation du rotateur d'image et
un dispositif de focalisation (4) côté sortie du rotateur d'image,
**caractérisé en ce**
**qu'**entre le rotateur d'image (2) et le dispositif de focalisation (4), il est disposé un dispositif de compensation (3) qui tourne dans la même direction de rotation et à la même fréquence de rotation avec le rotateur d'image (2), le dispositif de compensation (3) présentant une unité de décalage parallèle (15) et une unité de modification angulaire (13, 14), et
en ce que le dispositif de compensation (3; 13, 14, 15) est réglable dans un ajustement de correction servant de réglage de base dans sa position relative de rotation par rapport au rotateur d'image (2), ce réglage de base étant conservé donc pour toutes les positions et angles de faisceau du rotateur d'image.

2. Dispositif selon la revendication 1, **caractérisé en ce que** l'unité de décalage parallèle comprend une plaque parallèle plane (15).

3. Dispositif selon la revendication 1, **caractérisé en ce que** la plaque parallèle plane (15) est rotative perpendiculairement à l'axe de rotation.

4. Dispositif selon l'une des revendications 1 à 3, **caractérisé en ce que** l'unité de modification angulaire présente deux clavettes (13, 14) qui est chacune rotative de manière indépendante perpendiculairement à l'axe de rotation.

5. Dispositif selon la revendication 4, **caractérisé en ce que** les deux clavettes (13, 14) présentent des angles de clavette opposés.

6. Dispositif selon la revendication 2 et la revendication 4, **caractérisé en ce que** les deux clavettes (13, 14) et la plaque parallèle plane (15) sont maintenues réglables les unes par rapport aux autres dans leur position de base.

7. Dispositif selon l'une des revendications 1 à 3, **caractérisé en ce que** le rotateur d'image (2) est formé par un prisme (7; 25).

8. Dispositif selon la revendication 2 ou la revendication 4, **caractérisé en ce que** le rotateur d'image (2) est formé par un prisme de Dove (7).

9. Dispositif selon la revendication 6 ou 7, **caractérisé en ce que** le prisme (7; 25) est disposé dans le rotateur d'image (2) de sorte qu'il se produit dans une rotation unique du rotateur d'image (2) une seconde rotation d'un faisceau laser (5) guidé par le prisme (7; 25).

10. Dispositif selon la revendication 1, **caractérisé en ce que** le rotateur d'image (2) est formé par un dispositif rigide de miroirs K (26).

11. Dispositif selon la revendication 7, **caractérisé en ce que** le rotateur d'image (2) est formé par un prisme de l'abbé-König (25).

12. Dispositif selon la revendication 4, **caractérisé en ce que** les deux clavettes (13, 14) sont disposées à proximité l'une de l'autre.

13. Dispositif selon l'une des revendications 1 à 12, **caractérisé en ce que** le rotateur d'image (2) est disposé dans un moteur à arbre creux (6).

14. Dispositif selon l'une des revendications 1 à 13, **caractérisé en ce que** le manipulateur de faisceau (1) présente pour le réglage de la position du faisceau et pour le réglage de l'angle de faisceau respectivement un dispositif de réglage (9, 10).

15. Dispositif selon la revendication 14, **caractérisé en ce que** le dispositif de réglage (9, 10) comprend des organes de réglage hautement dynamiques.

16. Dispositif selon l'une des revendications 1 à 14, **caractérisé en ce que** les parties (13, 14, 15) du dispositif de compensation (3) sont disposées dans une gaine rotative (16) concentrique autour de l'axe du rotateur d'image (2).

17. Dispositif selon l'une des revendications 1 à 16, **caractérisé en ce qu'**il est prévu dans la direction de faisceau en aval du dispositif de compensation (3), un dispositif de focalisation (4) qui est disposé coulissant en supplément dans la direction de rayon (22).

18. Dispositif selon la revendication 14, **caractérisé en ce que** la position de faisceau et ainsi le diamètre de perçage d'entrée ainsi que l'angle de faisceau et ainsi le diamètre de perçage de sortie sont réglables par une clavette rotative (10) perpendiculaire au trajet de faisceau et par un miroir (9) coulissant ensemble avec la clavette dans la direction de propagation de faisceau.

19. Dispositif selon la revendication 7, **caractérisé en ce que** le prisme présente un angle de trapèze sous lequel la variation d'intensité causée par la polarisation est minimisée par une rotation du prisme (7).

20. Dispositif selon l'une des revendications 1 à 19, **caractérisé en ce qu'**entre le manipulateur (1) et le rotateur d'image (2), il est disposé une plaque λ/2 (37) tournant de manière synchrone avec le rotateur d'image (2), pour entrainer la rotation de la polarisation.

21. Dispositif selon la revendication 14, **caractérisé en ce que** les éléments du manipulateur de faisceau (1) sont mobiles de manière synchrone au déplacement de rotation du le rotateur d'image (2) pour générer ainsi des perçages non symétriques en rotation.

22. Dispositif selon la revendication 1, **caractérisé en ce que** le rotateur d'image est formé par un dispositif de miroirs K (30) réglables les uns par rapport aux autres dans leurs surfaces réflectrices (28', 29').

23. Dispositif selon l'une des revendications 1 à 22, **caractérisé en ce qu'**une plaque λ/4 (36) réglable est disposée perpendiculairement à la direction de propagation de faisceau en amont du manipulateur de faisceau (1).
